# EUROPEAN PATENT SPECIFICATION

(11) **EP 3 069 913 B1**
(45) Date of publication and mention of the grant of the patent: **03.10.2018**
(21) Application number: 15751400.1
(22) Date of filing: 20.01.2015
(51) Int. Cl.: B60H 1/32

(54) **DRAINAGE MEMBER AND VEHICLE-USE AIR CONDITIONER DEVICE USING SAME**
DRAINAGEELEMENT UND KLIMAANLAGE EINES FAHRZEUGS DAMIT
ÉLÉMENT DE DRAINAGE ET DISPOSITIF DE CLIMATISATION POUR VÉHICULE UTILISANT CE DERNIER

(30) Priority: 18.02.2014 JP 2014028688
(43) Date of publication of application: 21.09.2016
(73) Proprietor: Japan Climate Systems Corporation, Higashihiroshima-shi, Hiroshima 739-0153 (JP)
(72) Inventor: HYAKUDA, Kazutoshi, Higashihiroshima-shi Hiroshima 739-0153 (JP); NAGATA, Hiromichi, Higashihiroshima-shi Hiroshima 739-0153 (JP)
(74) Representative: Herrmann, Uwe
(86) International application number: PCT/JP2015/000230
(87) International publication number: WO 2015/125410

(56) References cited:
- EP-A1- 1 645 447
- DE-A1-102008 037 733
- JP-A- H08 175 437
- JP-A- H08 175 437
- JP-U- H06 826
- JP-U- S 583 722
- JP-U- S 583 722
- JP-U- S61 122 483
- US-A- 2 225 472

## Description

### TECHNICAL FIELD

The present invention relates to a drainage member and a vehicle air conditioner using the same.

### BACKGROUND ART

In a casing of a vehicle air conditioner for use in cars and other vehicles, provided generally is a cooling heat exchanger for cooling air. If the air is cooled by this cooling heat exchanger, moisture in the air condenses to produce condensed water. Thus, the condensed water is drained out of the vehicle cabin by providing a drain outlet through the casing and by connecting a drainage member to the drain outlet.

Patent Document 1 discloses a drainage member in which a connection port to be fitted into a through hole cut through a vehicle body panel (vehicle cabin wall) is connected to the tip end of a drainpipe, of which the base end is connected to the drain outlet, and in which a seal member is attached to the connection port.

On the other hand, Patent Document 2 discloses a drainage member in which a drain hose (drainpipe) connected to a drain (drain outlet) of a cooling unit (vehicle air conditioner) is provided with a substantially disklike grommet to be fitted into a grommet attachment hole (through hole) of the vehicle body panel such that the grommet forms an integral part of the drain hose. An outer peripheral groove to be fitted into the grommet attachment hole is formed on the outer periphery of the grommet. A portion of the grommet closer to the tip end than the outer peripheral groove is a disklike outer engaging portion engaged with the vehicle body panel from outside the vehicle cabin. On the other hand, a portion of the grommet closer to the base end is a disklike inner engaging portion engaged with the vehicle body panel from inside the vehicle cabin. The outside diameter of the inner engaging portion is set to be larger than that of the outer engaging portion. The drain hose and the grommet are formed integrally out of an elastic material.

### CITATION LIST

### PATENT DOCUMENT

PATENT DOCUMENT 1: Japanese Unexamined Patent Publication No. 2010-76513
PATENT DOCUMENT 2: Japanese Unexamined Patent Publication No. 2002-274162

EP 1 645 447 A1 relates to a condensate draining hose for vehicle air conditioning systems.

JP H 08 175437 A discloses a vehicle cabin, wherein a flange is provided both outside and inside the vehicle cabin.

### SUMMARY OF INVENTION

### TECHNICAL PROBLEM

The drainage member of Patent Document 1 is comprised of the drainpipe, the connection port, and the seal member. Thus, if the drainpipe and the seal member are formed out of a soft elastic material such as rubber and if the connection port is formed out of a rigid material such as resin, then a sufficient degree of sealability would be ensured with the connection port fitted into the through hole with reliability. However, since the drainage member is comprised of those multiple members, the manufacturing cost of the drainage member is high, which is a problem.

Thus, such a problem may be overcome by using a drainage member in which a drain hose and a grommet are formed integrally as in the one disclosed in Patent Document 2. In this case, to have the drainage member of Patent Document 2 fitted into the through hole, the tip end of the drain hose needs to be inserted into a grommet attachment hole from inside the vehicle cabin, and an outer engaging portion of the grommet needs to be extruded out of the vehicle cabin through the grommet attachment hole. However, since the grommet and the drain hose have been formed integrally out of an elastic material and are deformable easily, the grommet may be imperfectly fitted into the grommet attachment hole, i.e., part of the outer engaging portion of the grommet may be located inside the vehicle cabin with respect to the grommet attachment hole. If the grommet were fitted in the hole imperfectly in that manner, the grommet might detach itself from the grommet attachment hole due to vibrations produced while the vehicle is traveling.

Thus, to fit the grommet of Patent Document 2 into the grommet attachment hole with reliability, the operator needs to check, with his or her own eyes, the position of the outer engaging portion of the grommet from outside the vehicle cabin. If the outer engaging portion is partially located inside the vehicle cabin, he or she needs to pull the tip end of the drain hose from outside the vehicle cabin to the point that the outer engaging portion is located entirely outside the vehicle cabin. To get this job done, one operator may insert the tip end of the drain hose into the grommet attachment hole from inside the vehicle cabin, and then get out of the vehicle cabin to check the position of the outer engaging portion from outside the vehicle cabin. Alternatively, two operators may do the job of mounting the drainage member inside and outside the vehicle cabin, respectively. As a result, in any of these two situations, the assembly cost rises, which is not beneficial.

Also, in general, a number of operators will do the assembling job on the same assembly line. However, when a drainage member which is often fitted imperfectly such as the one disclosed in Patent Document 2 is being mounted onto a wall of the vehicle cabin, that imperfect fitting state is even more likely to arise due to some cooperation error between the operators, which is another problem.

In view of the foregoing background, it is therefore an object of the present invention to have the drainage member mounted onto a wall of the vehicle cabin easily and with reliability even if only one operator is doing the job.

### SOLUTION TO THE PROBLEM

A first aspect of the present invention is a drainage member with the features of claim 1.

According to this configuration, while an operator who is working inside a vehicle cabin (i.e., the other of the inside and outside of the vehicle cabin) is mounting the drainage member onto a vehicle cabin wall, he or she first brings the engaging bevel of the drainage member into contact with the circumferential edge of the through hole, and then applies force to the drainage member so as to extrude the engaging bevel into the outside of the vehicle cabin (i.e., one of the inside or outside of the vehicle cabin) through the through hole. Then, the engaging bevel and three engaging stops are elastically deformed radially inward and extruded out of the vehicle cabin through the through hole. After having been extruded out of the vehicle cabin, the engaging bevel and three engaging stops restore their original shape that protrudes radially outward with respect to the circumferential edge of the through hole.

Next, if the operator applies force to the drainage member so as to draw it toward him- or herself from inside the vehicle cabin, the three engaging stops abut with the circumferential edge of the through hole. In this case, since the three engaging stops cover discontinuous areas in the circumferential direction, the three engaging stops are elastically deformed radially inward so easily as to pass through the through hole and be drawn into the inside of the vehicle cabin. On the other hand, the area covered by the engaging bevel in the circumferential direction is larger than the sum of the areas covered by the three engaging stops. That is why even if the engaging bevel abuts with the circumferential edge of the through hole, the engaging bevel is elastically deformable radially inward less easily than the three engaging stops are. Thus, the engaging bevel does not pass through the through hole, but stays outside the vehicle cabin.

Meanwhile, the three engaging stops that have been drawn into the inside of the vehicle cabin restore their original shape that protrudes radially outward with respect to the circumferential edge of the through hole. This thus allows the operator who is working inside the vehicle cabin to see, with his or her own eyes, if the three engaging stops have been drawn completely into the vehicle cabin. In addition, the three engaging stops cover discontinuous areas in the circumferential direction. Thus, at a point in time when the three engaging stops are drawn into the inside of the vehicle cabin, the operator can check, with his or her own eyes, whether or not the engaging bevel is located entirely outside the vehicle cabin.

As can be seen, just by having the operator work from inside the vehicle cabin, the drainage member may be mounted on the vehicle cabin wall such that the engaging bevel and the three engaging stops are respectively engaged with the circumferential edge of the through hole from outside and inside the vehicle cabin. Thus, there is no need for the operator to work from outside the vehicle cabin.

Note that the same or similar advantages as/to the ones described above are also achievable even if an operator who is working outside the vehicle cabin mounts the drainage member onto the vehicle cabin wall such that the engaging bevel and the three engaging stops are respectively located inside and outside the vehicle cabin.

According to the invention, the engaging bevel has a side surface which faces toward the second engaging portion and which defines a first sloped surface that slopes such that the closer to a radially outer edge of the drainpipe, the closer to the second engaging portion the first sloped surface is.

According to this configuration, if the drainage member, which has been mounted onto the vehicle cabin wall such that the the engaging bevel and the three engaging stops are respectively located outside and inside the vehicle cabin, is pulled inward from inside the vehicle cabin, the first sloped surface of the engaging bevel abuts with the circumferential edge of the through hole from outside the vehicle cabin, and the engaging bevel is elastically deformed so as to expand radially outward. Thus, it is so difficult for the engaging bevel to pass through the through hole from the outside of the vehicle cabin into the inside of the vehicle cabin that the engaging bevel stays engaged with the circumferential edge of the through hole from outside the vehicle cabin.

Note that even if the drainage member has been mounted onto the vehicle cabin wall such that the engaging bevel and the three engaging stops are respectively located inside and outside the vehicle cabin, the first sloped surface of the engaging bevel also abuts with the circumferential edge of the through hole from inside the vehicle cabin, and the engaging bevel is also elastically deformed so as to expand radially outward. Thus, the engaging bevel also stays engaged with the circumferential edge of the through hole as in the situation described above.

According to the invention, the three engaging stops have a side surface which faces away from the engaging bevel and which defines a second sloped surface that slopes such that the closer to a radially outer edge of the drainpipe, the closer to the engaging bevel the second sloped surface is.

According to this configuration, while an operator who is working inside the vehicle cabin and who has once extruded the engaging bevel and the three engaging stops into the outside of the vehicle cabin is attempting to draw them into the vehicle cabin again, the second sloped surface abuts with the circumferential edge of the through hole, and the three engaging stops are gradually elastically deformed radially inward to pass through the through hole smoothly.

Note that even if an operator who is working outside the vehicle cabin is going to mount the drainage member onto the vehicle cabin wall such that the engaging bevel and three engaging stops are respectively located inside and outside the vehicle cabin, the second sloped surface also abuts with the circumferential edge of the through hole, and the three engaging stops are gradually elastically deformed radially inward to pass through the through hole smoothly as in the situation described above.

According to the invention, the engaging bevel covers the entire outer periphery of the drainpipe.

According to this configuration, the engaging bevel protrudes radially outward with respect to the entire circumferential edge of the through hole. In this case, the engaging bevel forms an integral part of the drainpipe and is made of an elastic material, and therefore, easily makes close contact with the circumferential edge of the through hole. Thus, the engaging bevel functions as a seal member around the entire circumferential edge of the through hole, and therefore, reduces the amount of rainwater and other kinds of moisture entering the inside of the vehicle cabin from outside the vehicle cabin.

According to an embodiment, a recess continuous with the engaging bevel has been formed on a portion of the outer periphery of the drainpipe, the portion being located closer to the three engaging stops than to the engaging bevel.

According to this configuration, for example, while an operator who is working inside the vehicle cabin is trying to extrude the engaging bevel into the outside of the vehicle cabin through the through hole, the engaging bevel may be elastically deformed more easily toward the inside of the vehicle cabin and radially inward. As a result, the engaging bevel may be extruded out of the vehicle cabin with even less force.

Note that even if an operator who is working outside the vehicle cabin is mounting the drainage member on the vehicle cabin wall such that the engaging bevel and the three engaging stops are respectively located inside and outside the vehicle cabin, the engaging bevel may also be elastically deformed toward the outside of the vehicle cabin and radially inward as easily as in the situation described above. As a result, the operator who is working outside the vehicle cabin may also push the engaging bevel into the vehicle cabin from outside the vehicle cabin with even less force.

### ADVANTAGES OF THE INVENTION

According to the first aspect of the invention, a single operator is allowed to mount the drainage member onto the vehicle cabin wall easily and with reliability.

According to the second aspect of the invention, a side surface of the engaging bevel which faces toward the three engaging stops is provided with a first sloped surface, thus ensuring that the drainage member stays mounted on the vehicle cabin wall with reliability.

According to the third aspect of the invention, a side surface of the three engaging stops which faces away from the engaging bevel is provided with a second sloped surface, thus allowing the operator to mount the drainage member on the vehicle cabin wall even more easily.

According to the fourth aspect of the invention, the engaging bevel is provided to cover the entire outer periphery of the drainpipe, and therefore, the amount of rainwater and other kinds of moisture entering the vehicle cabin from outside the vehicle cabin may be reduced.

According to the fifth aspect of the invention, a recess continuous with the engaging bevel is formed on the outer periphery of the drainpipe, which allows the operator to mount the drainage member onto the vehicle cabin wall even more easily.

### BRIEF DESCRIPTION OF THE DRAWINGS

[FIG. 1] FIG. 1 is a front view of a vehicle air conditioner according to an embodiment of the present invention.
[FIG. 2] FIG. 2 is a front view of a drainage member according to an embodiment.
[FIG. 3] FIG. 3 is a view thereof as viewed in the direction indicated by the arrow III shown in FIG. 2.
[FIG. 4] FIG. 4 is a view thereof as viewed in the direction indicated by the arrow IV shown in FIG. 2.
[FIG. 5] FIG. 5 is a cross-sectional view thereof taken along the plane V-V shown in FIG. 2.
[FIG. 6] FIG. 6 is a cross-sectional view thereof taken along the plane VI-VI shown in FIG. 2.
[FIG. 7] FIG. 7 illustrates a state where the drainage member is yet to be mounted onto a floor panel and corresponds to FIG. 6.
[FIG. 8] FIG. 8 illustrates a state where an engaging bevel and front, rear and lower engaging stops have been extruded through a through hole into the outside of a vehicle cabin and corresponds to FIG. 6.
[FIG. 9] FIG. 9 illustrates a state where the front, rear and lower engaging stops have been drawn into the vehicle cabin through the through hole and where the engaging bevel is brought into contact with the circumferential edge of the through hole from the outside of the vehicle cabin and corresponds to FIG. 6.
[FIG. 10] FIG. 10 illustrates a state where the drainage member is mounted onto the floor panel and corresponds to FIG. 6.

### DESCRIPTION OF EMBODIMENTS

Embodiments of the present invention will now be described with reference to the drawings. Note that the following description of preferred embodiments is mere an example in nature and is not intended to limit the scope, use or applications of the present invention.

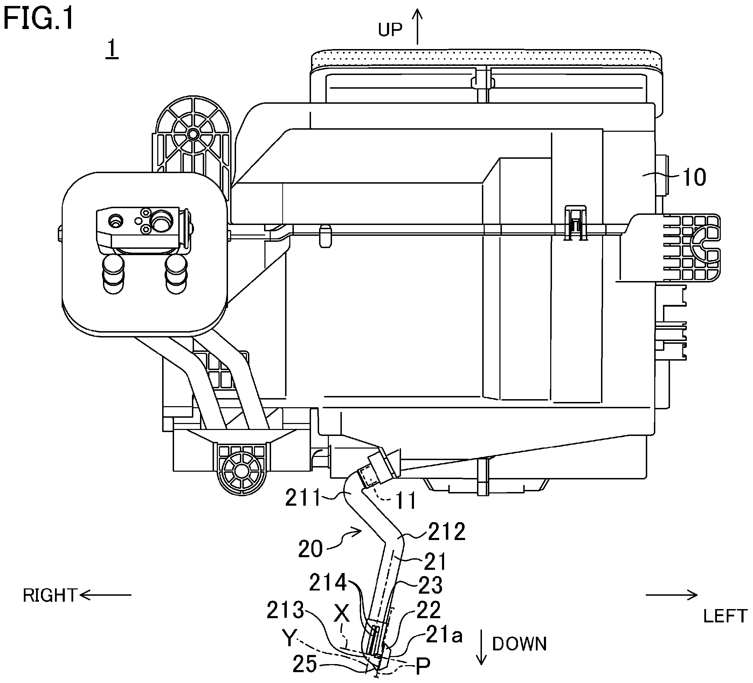

FIG. 1 illustrates a vehicle air conditioner 1 according to an embodiment of the present invention. In the casing 10 of this vehicle air conditioner 1, housed are a cooling heat exchanger (not shown), a heating heat exchanger (not shown), various types of dampers (not shown), and other members. The vehicle air conditioner 1 is designed to be installed in the cabin of a vehicle such as a car, and is configured to mix together, in the casing 10, the air cooled by passing through the cooling heat exchanger and the air heated by passing through the heating heat exchanger, and then blow this air mixture into the vehicle cabin, thereby controlling the temperature inside the vehicle cabin.

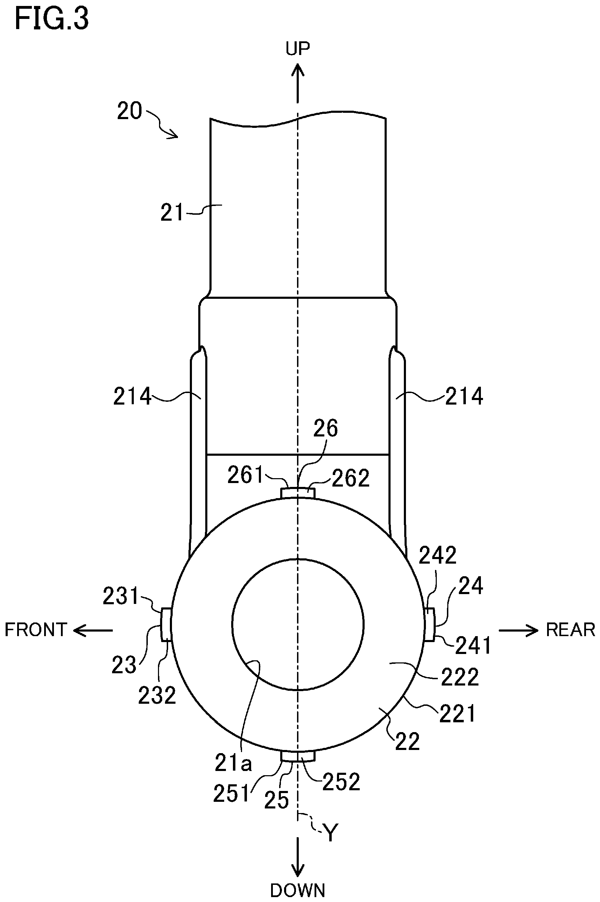

In the following description, unless stated otherwise, the "upper," "lower," "front," "rear," "left," and "right" sides are defined with respect to a reference state where the vehicle air conditioner 1 is installed in the vehicle body. More specifically, the "upper" and "lower" sides respectively refer herein to vertically upside (i.e., the upper side in FIG. 1) and vertically downside (i.e., the lower side in FIG. 1). The "front" and "rear" sides respectively refer herein to the front and rear sides of the vehicle in the longitudinal direction thereof (i.e., the left and right sides in FIG. 3). The "left" and "right" sides respectively refer herein to the left and right sides of the vehicle in the width direction thereof (i.e., the right and left sides in FIG. 1).

In this vehicle air conditioner 1, when the air passes through the cooling heat exchanger, the moisture in the air condenses to produce condensed water, which drops from the cooling heat exchanger onto the bottom of the casing 1. To drain this condensed water into the outside of the vehicle cabin, a drain outlet 11 which opens toward the lower right corner has been cut through the bottom of the casing 10, and is connected to a drainage member 20.

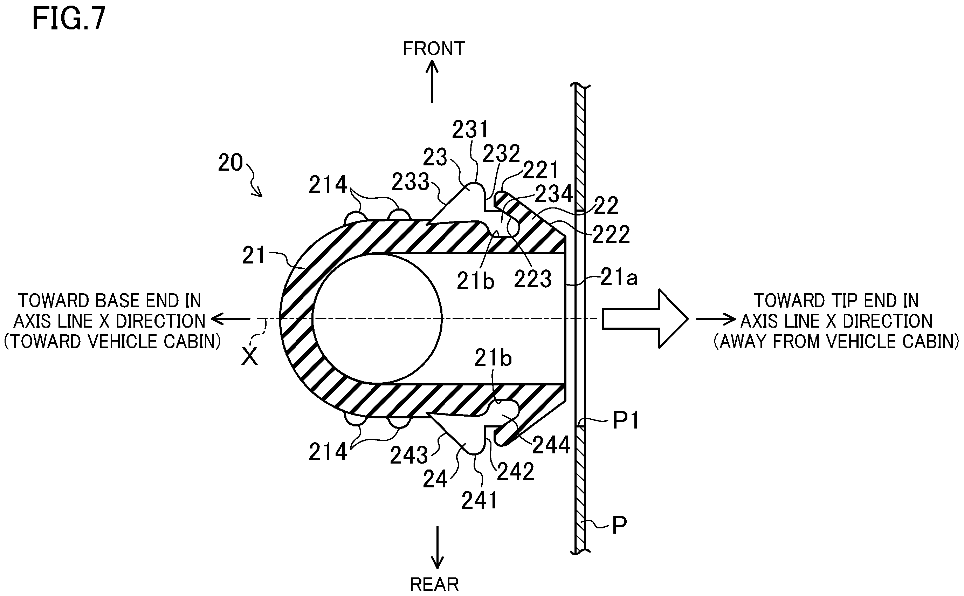

The drainage member 20 extends generally downward from its upper end connected to the drain outlet 11. On the other hand, the lower end of the drainage member 20 is inserted into a through hole PI (shown in FIG. 7 and other drawings), cut through a floor panel P (vehicle cabin wall) that forms the floor of the vehicle cabin, from inside the vehicle cabin. In this manner, the drainage member 20 is mounted onto the floor panel P. The through hole PI is cut through a sidewall of a portion bulging over the floor panel P (i.e., a floor tunnel) and opens generally horizontally.

As shown in FIGS. 1-4, the drainage member 20 includes: a drainpipe 21 made of an elastic material such as rubber; an engaging bevel 22 (first engaging portion) engaged with a circumferential edge of a through hole PI from the outside of the vehicle cabin (which is one side of the inside and outside of the vehicle cabin); and a front engaging stop 23 (second engaging portion), a rear engaging stop 24 (second engaging portion)(shown in FIG. 3 and other drawings), and a lower engaging stop 25 (second engaging portion), all of which are engaged with the circumferential edge of the through hole PI from the inside of the vehicle cabin (i.e., the other side of the inside and outside of the vehicle cabin). The engaging bevel 22 and the front, rear, and lower engaging stops 23, 24, and 25 form respective integral parts of the drainpipe 21.

As shown in FIG. 1, the base end of the drainpipe 21 is the upper end of the drainage member 20, and the tip end of the drainpipe 21 is the lower end of the drainage member 20. The tip end of the drainpipe 21 has a tip end hole 21a (shown in FIG. 3) which opens to the left. The condensed water is drained from the inside of the casing 10 through the tip end hole 21a into the outside of the vehicle cabin via the drain outlet 11, the inside of the drainpipe 21, and the through hole PI.

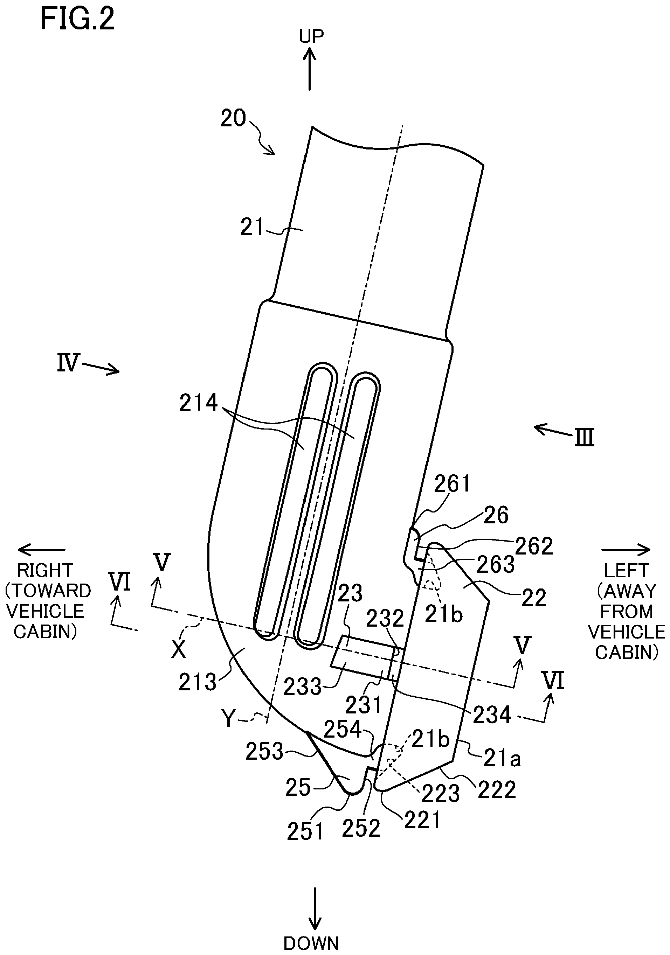

The drainpipe 21 has, in the vicinity of its base end, a base-end bent portion 211 which extends toward the lower right and then is bent toward the lower left. The drainpipe 21 also has, near its vertically middle portion, a near-middle bent portion 212 which extends toward the lower left and then is bent generally downward. The drainpipe 21 further has, in the vicinity of the tip end thereof, a tip-end bent portion 213 which extends generally downward and then is bent generally to the left. Thus, as also shown in FIG. 2, the center axis line X at the tip end of the drainpipe 21 extends generally laterally. The outside diameter of the tip-end bent portion 213 is slightly larger than that of the drainpipe 21 in the vicinity of the vertically middle portion thereof. In the upper part of the tip-end bent portion 213, the center axis line Y extends generally vertically.

Note that in the following description, unless stated otherwise, the "axis line X direction," "axis line X radial direction," "axis line X circumferential direction," "closer to tip end in axis line X direction," "closer to base end in axis line X direction," "axis line Y direction," "axis line Y radial direction," "axis line Y circumferential direction," "closer to tip end in axis line Y direction," and "closer to base end in axis line Y direction" are all defined with respect to the drainpipe 21. Specifically, the "axis line X direction" refers herein to a direction parallel to the axis line X. The "axis line X radial direction" refers herein to a direction perpendicular to the axis line X. The "axis line X circumferential direction" refers herein to a circumferential direction around the axis line X. "Closer to tip end in the axis line X direction" means herein being located closer to the tip end of the drainpipe 21 in the axis line X direction (i.e., generally the right end in FIG. 2). "Closer to base end in the axis line X direction" means herein being located closer to the base end of the drainpipe 21 in the axis line X direction (i.e., generally the left end in FIG. 2). The "axis line Y direction" refers herein to a direction parallel to the axis line Y. The "axis line Y radial direction" refers herein to a direction perpendicular to the axis line Y. The "axis line Y circumferential direction" refers herein to a circumferential direction around the axis line Y. "Closer to tip end in the axis line Y direction" means herein being located closer to the tip end of the drainpipe 21 in the axis line Y direction (i.e., generally the lower end in FIG. 2). "Closer to base end in the axis line Y direction" means herein being located closer to the base end of the drainpipe 21 in the axis line Y direction (i.e., generally the upper end in FIG. 2).

As shown in FIGS. 2-4, the outer periphery of the tip-end bent portion 213 of the drainpipe 21 has two projections 214 on the front side and two more projections 214 on the rear side. These projections 214 are arranged parallel to each other so as to protrude radially outward in the axis line Y radial direction of the drainpipe 21 and to extend in the axis line Y direction.

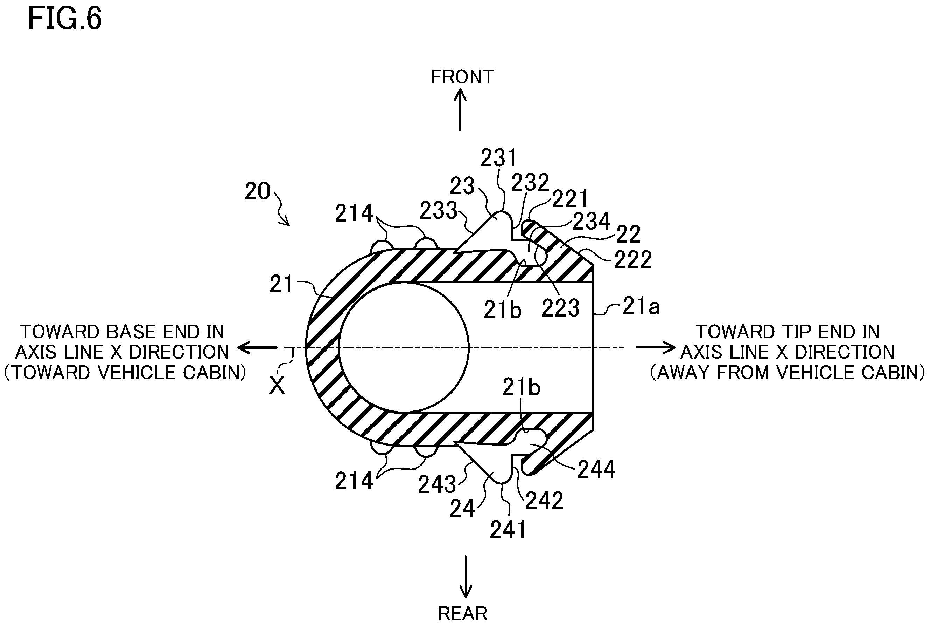

As shown in FIGS. 2-6, the engaging bevel 22 is provided around the entire periphery of the drainpipe 21 in the axis line X circumferential direction so as to project radially outward in the axis line X radial direction from the outer periphery of the drainpipe 21 at the tip end thereof. As shown in FIGS. 2 and 6, the engaging bevel 22 is sloped such that the closer to a radially outer edge thereof in the axis line X radial direction, the closer to the base end in the axis line X direction the engaging bevel 22 is.

The outside diameter of the engaging bevel 22 as measured at the tip end thereof in the axis line X direction, i.e., the outside diameter of the drainage member 20 as measured at the tip end thereof in the axis line X direction, is set to be smaller than the inside diameter of the through hole PI of the floor panel P (shown in FIG. 7 and other drawings). On the other hand, the diameter of an edge of the engaging bevel 22 as measured at the tip end thereof in its protruding direction, i.e., the diameter of an outer edge 221 of the engaging bevel 22 located at the radially outer edge in the axis line X radial direction, is set to be larger than the inside diameter of the through hole PI of the floor panel P. Thus, the engaging bevel 22 is configured to protrude radially outward with respect to the circumferential edge of the through hole PI when the drainage member 20 is mounted onto the floor panel P.

As shown in FIGS. 2, 3, 5 and 6, a side surface of the engaging bevel 22 located closer to the tip end in the axis line X direction is a bevel tip-end sloped surface 222 which is sloped such that the closer to the radially outer edge in the axis line X radial direction, the closer to the base end in the axis line X direction the sloped surface 222 is. Meanwhile, as shown in FIGS. 2, 4 and 6, another side surface of the engaging bevel 22 in the protruding direction thereof, which is located closer to the base end in the axis line X direction, is a bevel base-end sloped surface 223 (first sloped surface) which is sloped such that the closer to the radially outer edge in the axis line X radial direction, the closer to the base end in the axis line X direction (i.e., the closer to the radially outer edge in the axis line X radial direction, the closer to the front, rear, and lower engaging stops 23, 24, and 25) the sloped surface 223 is.

As shown in FIGS. 2 and 6, a plurality of thinned portions 21b (recesses), continuous with the engaging bevel 22, are provided on the outer periphery of the drainpipe 21 in the axis line X circumferential direction so as to be located closer to the base end in the axis line X direction than the engaging bevel 22 is. These thinned portions 21b are spaced apart from each other in the axis line X circumferential direction by a continuous portion 234 of the front engaging stop 23 (to be described later), a continuous portion 244 (shown in FIG. 6 and other drawings) of the rear engaging stop 24, a continuous portion 254 of the lower engaging stop 25, and a continuous portion 263 of the upper protrusion 26. The base end of each of these thinned portions 21b in the axis line X direction is located somewhat closer to the base end in the axis line X direction than the outer edge 221 of the engaging bevel 22 is. As shown in FIG. 6, a portion of the drainpipe 21 with any of these thinned portions 21b is thinner than another portion thereof located closer to the base end in the axis line X direction than the thinned portion 21b is. By providing these thinned portions 21b, the bevel base-end sloped surface 223 of the engaging bevel 22 is allowed to be elastically deformed easily toward the thinned portions 21b, i.e., the engaging bevel 22 is allowed to be elastically deformed easily toward the base end in the axis line X direction and radially inward in the axis line X radial direction.

As shown in FIGS. 2-6, the front, rear, and lower engaging stops 23, 24, and 25 are provided so as to protrude radially outward in the axis line X radial direction from the outer periphery of the drainpipe 21 near its tip end. In the axis line X direction, these front, rear, and lower engaging stops 23, 24, and 25 are located between the engaging bevel 22 and an extension of the axis line Y.

As shown in FIGS. 3-6, the front engaging stop 23 is provided so as to protrude forward generally horizontally from a front portion of the outer periphery of the drainpipe 21. The rear engaging stop 24 is provided so as to protrude backward generally horizontally from a rear portion of the outer periphery of the drainpipe 21. As shown in FIGS. 2-4, the lower engaging stop 25 is provided so as to protrude downward from a lower portion of the outer periphery of the drainpipe 21.

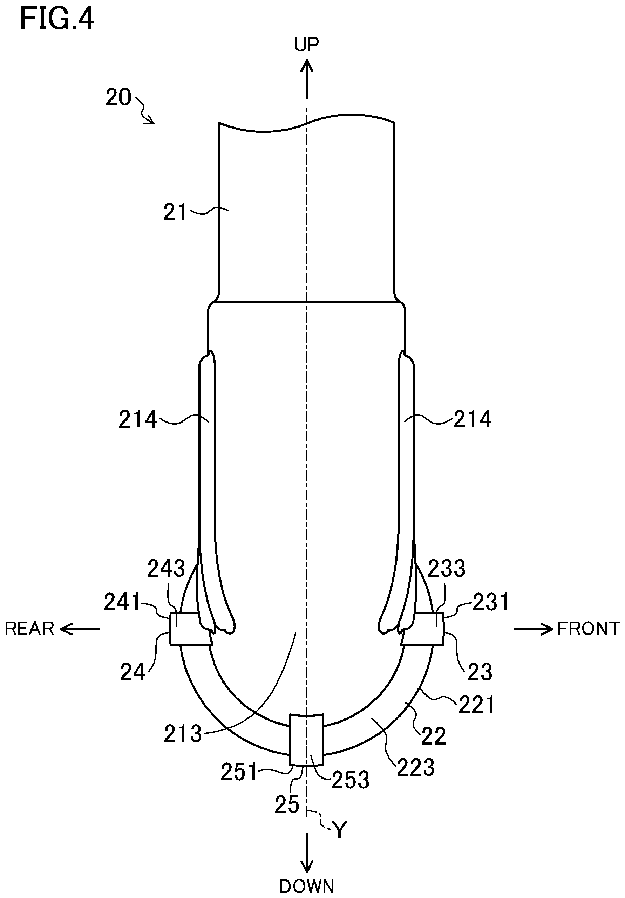

Thus, as shown in FIGS. 3 and 4, the front and rear engaging stops 23 and 24 are provided so as to be spaced apart from each other approximately 180 degrees in the axis line X circumferential direction. The front and lower engaging stops 23 and 25 are provided so as to be spaced apart from each other approximately 90 degrees in the axis line X circumferential direction. The rear and lower engaging stops 24 and 25 are also provided so as to be spaced apart from each other approximately 90 degrees in the axis line X circumferential direction. Accordingly, in the axis line X circumferential direction, the front, rear, and lower engaging stops 23, 24, and 25 cover discontinuous areas. Also, this drainpipe 21 is designed such that the sum of those areas covered by the front, rear, and lower engaging stops 23, 24, and 25 in the axis line X circumferential direction is smaller than the area covered by the engaging bevel 22 in that direction.

In the following description, the front engaging stop 23 will be described. The rear and lower engaging stops 24 and 25, however, have the same or similar configuration as/to the front engaging stop 23 except that those stops 24 and 25 protrude from the outer periphery of the drainpipe 21 in different directions from the front engaging stop 23. Thus, a detailed description thereof will be omitted herein.

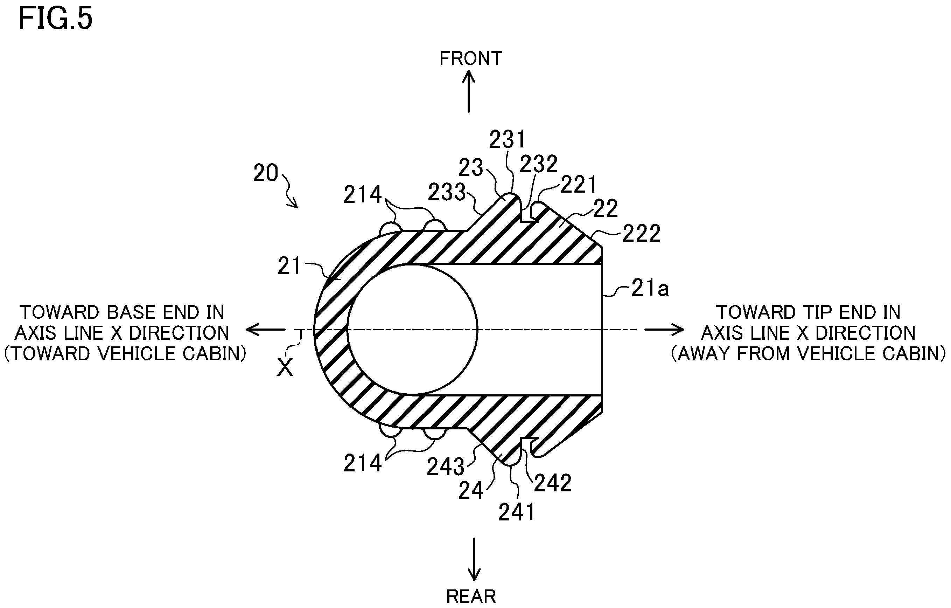

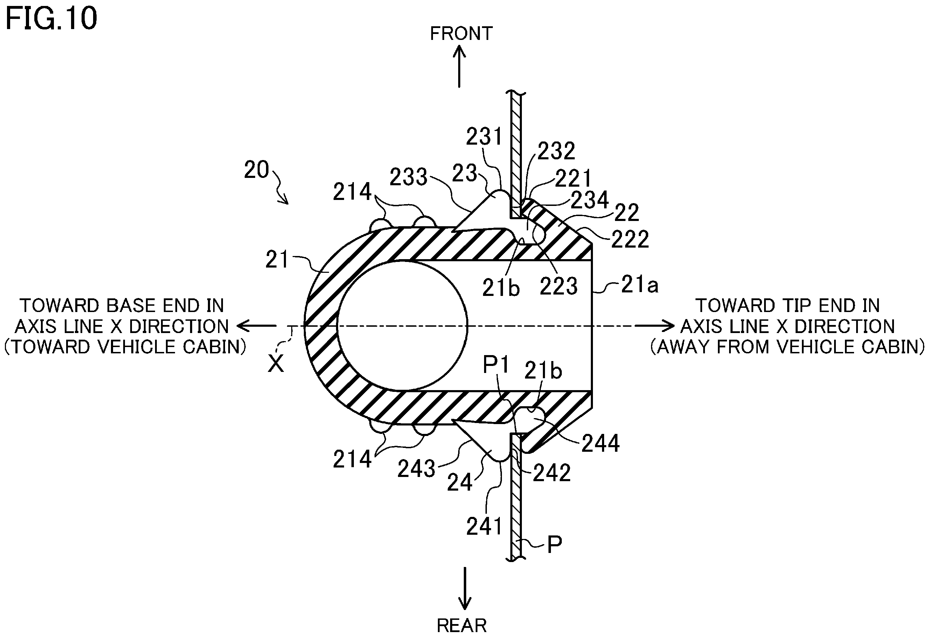

As shown in FIGS. 5 and 6, the tip end 231 of the front engaging stop 23 in the protruding direction thereof is located closer to the radially outer edge in the axis line X radial direction, and closer to the base end in the axis line X direction, than the outer edge 221 of the engaging bevel 22 is. Thus, when the drainage member 20 is mounted onto the floor panel P (shown in FIG. 10 and other drawings), the front engaging stop 23 will protrude radially outward with respect to the circumferential edge of the through hole PI (shown in FIG. 10 and other drawings).

An edge portion of the front engaging stop 23 located closer to the tip end in the axis line X direction is a stop tip-end edge portion 232 extending in the axis line X radial direction. In the axis line X direction, the stop tip-end edge portion 232 is located in the vicinity of the base end of its associated thinned portion 21b (shown in FIG. 6) in the axis line X direction. Between this stop tip-end edge portion 232 and an edge portion of the engaging bevel 22 located closer to the base end in the axis line X direction, a gap for holding the floor panel P (shown in FIG. 10 and other drawings) is left in the axis line X direction.

A side surface of the front engaging stop 23 located closer to the base end in the axis line X direction is a stop base-end sloped surface 233 (second sloped surface) which is sloped such that the closer to the radially outer edge in the axis line X radial direction, the closer to the tip end in the axis line X direction the sloped surface 233 is (i.e., the closer to the radially outer edge in the axis line X radial direction, the closer to the engaging bevel 22 the sloped surface 233 is).

As shown in FIG. 6, between the front engaging stop 23 and the engaging bevel 22, provided is a continuous portion 234 which is continuous with the stop tip-end edge portion 232 and the bevel base-end sloped surface 223. An edge portion of the continuous portion 234 located closer to the radially outer edge in the axis line X radial direction is located closer to the radially inner edge in the axis line X radial direction than the tip end 231 of the front engaging stop 23 in the protruding direction thereof and the outer edge 221 of the engaging bevel 22 are. In the axis line X direction, the continuous portion 234 is provided at a corresponding position to its associated thinned portion 21b.

As shown in FIGS. 2, 5, and 6, the respective tip ends 241, 251 of the rear and lower engaging stops 24 and 25 in the protruding direction thereof are located, just like the tip end 231 of the front engaging stop 23 in the protruding direction thereof, closer to the radially outer edge in the axis line X radial direction and closer to the base end in the axis line X direction, than the outer edge 221 of the engaging bevel 22 is. Thus, when this drainage member 20 is mounted onto the floor panel P (shown in FIG. 10 and other drawings), the rear and lower engaging stops 24 and 25 will also protrude, just like the front engaging stop 23, radially outward with respect to the circumferential edge of the through hole PI (shown in FIG. 10 and other drawings).

Furthermore, as shown in FIGS. 2 and 6, the rear and lower engaging stops 24 and 25, as well as the front engaging stop 23, have their respective stop tip-end edge portions 242, 252 and stop base-end sloped surfaces 243, 253 (second sloped surfaces), and continuous portions 244, 254 are respectively provided between the stop tip-end edge portions 242, 252 and the bevel base-end sloped surface 223.

As shown in FIG. 2, an upper protrusion 26 protruding radially outward in the axis line X radial direction (i.e., protruding upward) is provided on an upper portion of the outer periphery of the drainpipe 21 in the vicinity of the tip end thereof. This upper protrusion 26 is located closer to the base end in the axis line X direction than the engaging bevel 22 is. The base end of the upper protrusion 26 in the axis line X direction is continuous with the outer periphery of the drainpipe 21 on the left side of a part of the tip-end bent portion 213 thereof extending in the axis line Y direction.

The tip end 261 of the upper protrusion 26 in the protruding direction thereof is located closer to the base end in the axis line X direction, and closer to the radially outer edge in the axis line X radial direction, than the outer edge 221 of the engaging bevel 22 is.

An upper protrusion tip-end edge portion 262, which is a tip-end edge portion of the upper protrusion 26 in the axis line X direction, extends in the axis line X radial direction. Between this upper protrusion tip-end edge portion 262 and an edge portion of the engaging bevel 22 located closer to the base end in the axis line X direction, a gap for holding the floor panel P (shown in FIG. 10 and other drawings) is also left in the axis line X direction as in the gap between the stop tip-end edge portion 232 and the edge portion of the engaging bevel 22 located closer to the base end in the axis line X direction.

Between the upper protrusion 26 and the engaging bevel 22, provided is a continuous portion 263 continuous with the upper protrusion tip-end edge portion 262 and the bevel base-end sloped surface 223. An edge portion of the continuous portion 263 located closer to the radially outer edge in the axis line X radial direction is located closer to the radially inner edge in the axis line X radial direction than the tip end 261 of the upper protrusion 26 in the protruding direction thereof and the outer edge 221 of the engaging bevel 22 are. In the axis line X direction, the continuous portion 263 is located at a corresponding position to its associated thinned portion 21b.

Next, it will be described how to mount the drainage member 20 with such a configuration onto the floor panel P. First of all, as shown in FIG. 1, the upper end of the drainage member 20 is connected to the drain outlet 11 of the vehicle air conditioner 1. After that, as shown in FIG. 7, the tip end of the drainpipe 21 is arranged in the vicinity of the floor panel P such that the tip end hole 21a of the drainpipe 21 faces the through hole PI of the floor panel P from inside the vehicle body.

In this state, the operator holds the drainpipe 21 with his or her hand put on the projections 214 of the drainpipe 21 such that the drainpipe 21 is sandwiched in the longitudinal direction. Then, he or she makes the tip end of the drainpipe 21 in the axis line X direction project through the through hole P into the outside of the vehicle cabin, thereby bringing the bevel tip-end sloped surface 222 of the engaging bevel 22 into contact with the circumferential edge of the through hole PI from inside the vehicle cabin. In this case, the outside diameter of the engaging bevel 22 as measured at the tip end thereof in the axis line X direction is smaller than the inside diameter of the through hole P1. That is why even if the axis line X of the engaging bevel 22 disagrees to a certain degree with the center of the through hole PI, the operator may still bring the engaging bevel 22 into contact with the circumferential edge of the through hole PI by making the tip end of the drainpipe 21 in the axis line X direction project through the through hole PI into the outside of the vehicle cabin.

Next, the operator applies force onto the drainpipe 21 such that the engaging bevel 22 is pushed in its entirety out of the vehicle cabin. By applying such force, the bevel tip-end sloped surface 222 of the engaging bevel 22 receives force acting inward from the circumferential edge of the through hole PI toward the vehicle cabin. Then, the engaging bevel 22 is elastically deformed inwardly toward the vehicle cabin, i.e., toward the base end in the axis line X direction and toward the radially inner edge in the axis line X radial direction.

In this case, since the projections 214 function as anti-slip members, it is easy for the operator to apply force to the drainpipe 21 so as to extrude the engaging bevel 22 out of the vehicle cabin. In addition, a plurality of thinned portions 21b, continuous with the engaging bevel 22, are provided on the outer periphery of the drainpipe 21 in the axis line X circumferential direction so as to be located closer to the base end in the axis line X direction than the engaging bevel 22 is. Thus, it is easy for the engaging bevel 22 to be elastically deformed toward the base end in the axis line X direction and toward the radially inner edge in the axis line X radial direction such that the bevel base-end sloped surface 223 of the engaging bevel 22 comes closer to the thinned portions 21b. Also, the bevel tip-end sloped surface 222 is sloped such that the closer to the radially outer edge in the axis line X radial direction, the closer to the base end in the axis line X direction the sloped surface 222 is. For these reasons, the engaging bevel 22 is gradually elastically deformed radially inward in the axis line X radial direction to pass through the through hole PI smoothly and be extruded out of the vehicle cabin easily.

Next, the operator brings the respective stop tip-end edge portions 232, 242, and 252 (shown in FIG. 2 and other drawings) of the front, rear, and lower engaging stops 23, 24, and 25 (shown in FIG. 2 and other drawings), located closer to the base end in the axis line X direction than the engaging bevel 22 is, into contact with the circumferential edge of the through hole PI from inside the vehicle cabin. Then, the operator applies force to the drainpipe 21 so as to extrude the front, rear, and lower engaging stops 23, 24, and 25 out of the vehicle cabin. By applying such force, the stop tip-end edge portions 232, 242, and 252 receive force acting inward from the circumferential edge of the through hole PI toward the vehicle cabin. As a result, the front, rear, and lower engaging stops 23, 24, and 25 are elastically deformed radially inward in the axis line X radial direction, and are extruded out of the vehicle cabin through the through hole P1. In this case, the projections 214 also function as anti-slip members, and therefore, it is easy for the operator to apply force to the drainpipe 21 so as to extrude the front, rear, and lower engaging stops 23, 24, and 25 out of the vehicle cabin.

Then, the engaging bevel 22 and front, rear, and lower engaging stops 23, 24, and 25 that have been extruded out of the vehicle cabin restore such a shape that protrudes radially outward with respect to the circumferential edge of the through hole P1. At this point in time, although not shown, the upper protrusion tip-end edge portion 262 of the upper protrusion 26 (shown in FIG. 2 and other drawings) abuts with the circumferential edge of the through hole PI from inside the vehicle cabin, and acts as a stopper for reducing the relative positional shift of the drainage member 20 with respect to the floor panel P. Thus, the upper protrusion 26 stays inside the vehicle cabin.

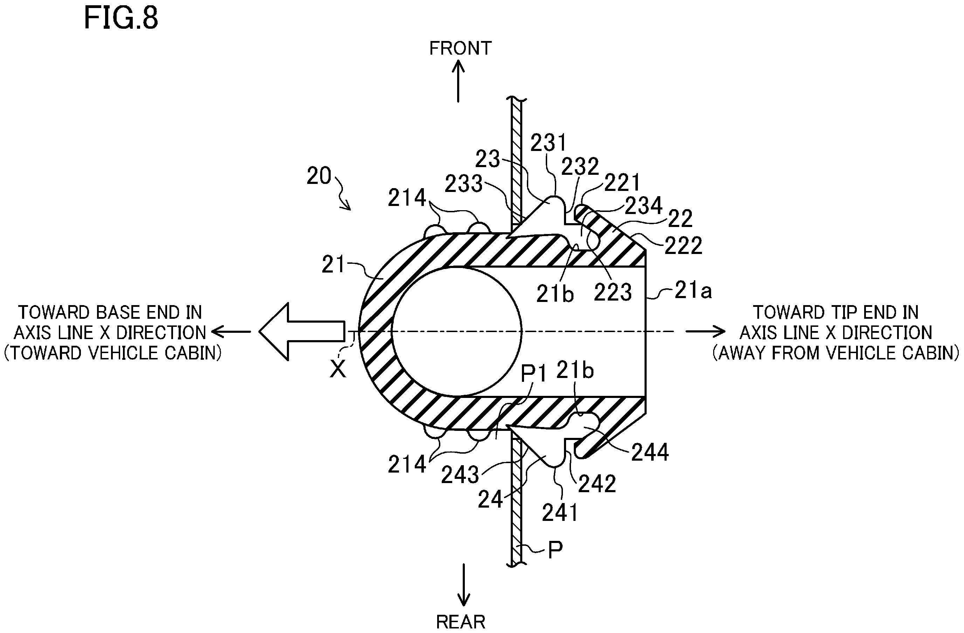

Next, as shown in FIG. 8, the operator pulls the drainpipe 21 from inside the vehicle cabin, thereby bringing the respective stop base-end sloped surfaces 233, 243, and 253 (shown in FIG. 2 and other drawings) of the front, rear, and lower engaging stops 23, 24, and 25 (shown in FIG. 2 and other drawings) into contact with the circumferential edge of the through hole PI from outside the vehicle cabin. If the operator further applies force in this state so as to pull the drainpipe 21 from inside the vehicle cabin, then the force applied at this time subjects the stop base-end sloped surfaces 233, 243, and 253 to force acting from the circumferential edge of the through hole PI to the outside of the vehicle cabin, thereby elastically deforming the front, rear, and lower engaging stops 23, 24, and 25 toward the outside of the vehicle cabin, i.e., toward the tip end in the axis line X direction and radially inward in the axis line X radial direction.

In this case, the projections 214 also function as anti-slip members, and therefore, it is easy for the operator to apply force in such a direction as to pull the drainpipe 21 from inside the vehicle cabin. In addition, since the front, rear, and lower engaging stops 23, 24, and 25 (shown in FIG. 3 and other drawings) cover discontinuous areas in the axis line X circumferential direction, it is easy for the front, rear, and lower engaging stops 23, 24, and 25 to be elastically deformed radially inward in the axis line X radial direction. Furthermore, the stop base-end sloped surfaces 233, 243, and 253 (shown in FIG. 2 and other drawings) are sloped such that the closer to the radially outer edge in the axis line X radial direction, the closer to the tip end in the axis line X direction the sloped surfaces 233, 243, and 253 are. Thus, the front, rear, and lower engaging stops 23, 24, and 25 are gradually elastically deformed radially inward in the axis line X radial direction to pass through the through hole PI smoothly and be introduced into the vehicle cabin easily.

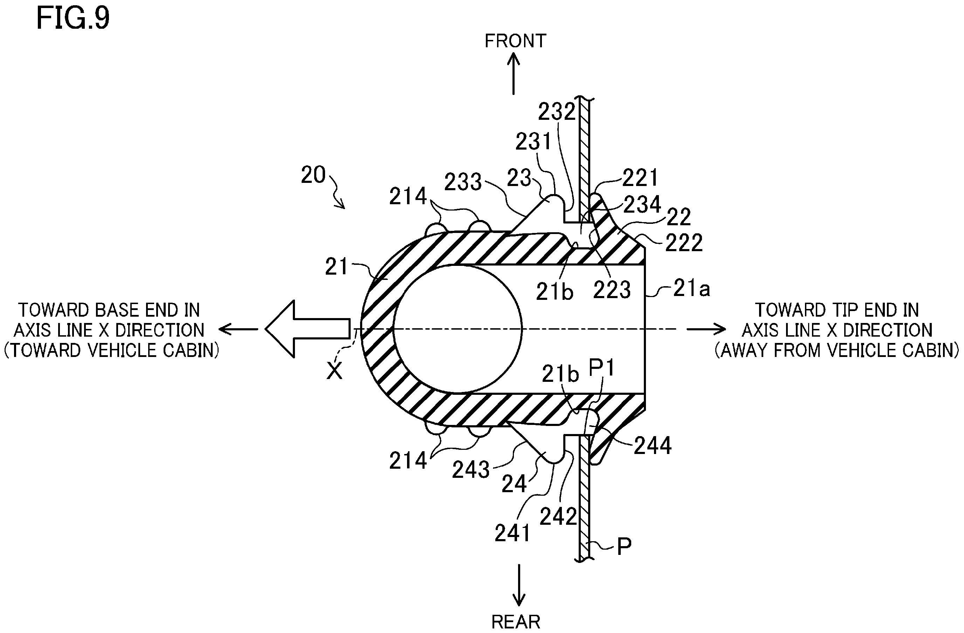

Then, as shown in FIG. 9, the front, rear, and lower engaging stops 23, 24, and 25 (shown in FIG. 2 and other drawings) which have been introduced into the vehicle cabin restore such a shape that projects radially outward with respect to the circumferential edge of the through hole P1. In addition, the bevel base-end sloped surface 223 of the engaging bevel 22 abuts with the circumferential edge of the through hole PI from outside the vehicle cabin.

In this case, the bevel base-end sloped surface 223 is sloped such that the closer to the radially outer edge in the axis line X radial direction, the closer to the base end in the axis line X direction the sloped surface 223 is. Thus, if the drainpipe 21 is pulled inward, i.e., toward the vehicle cabin, the bevel base-end sloped surface 223 abuts with the circumferential edge of the through hole P1. As a result, the engaging bevel 22 is elastically deformed so as to expand radially outward in the axis line X radial direction. In addition, the engaging bevel 22 is provided to cover the entire outer periphery of the drainpipe 21. Accordingly, the area covered by the engaging bevel 22 in the axis line X circumferential direction is larger than the sum of the areas covered by the front, rear, and lower engaging stops 23, 24, and 25 (shown in FIG. 3 and other drawings). Thus, to draw the engaging bevel 22 into the vehicle cabin through the through hole PI, greater force needs to be applied than when the front, rear, and lower engaging stops 23, 24, and 25 are drawn into the vehicle cabin through the through hole P1. Therefore, since the engaging bevel 22 is harder to draw into the vehicle cabin than the front, rear, and lower engaging stops 23, 24, and 25 are, the drainage member 20 is rarely mounted in a wrong manner (e.g., so that the engaging bevel 22 is located inside the vehicle cabin).

In this state, the front, rear, and lower engaging stops 23, 24, and 25 (shown in FIG. 2 and other drawings) are located inside the vehicle cabin. Therefore, the operator working inside the vehicle cabin is allowed to see, with his or her own eyes, if the front, rear, and lower engaging stops 23, 24, and 25 have been completely drawn into the vehicle cabin. In addition, the front, rear, and lower engaging stops 23, 24, and 25 cover discontinuous areas in the axis line X circumferential direction. Thus, when the front, rear, and lower engaging stops 23, 24, and 25 are drawn into the vehicle cabin, the operator working inside the vehicle cabin is allowed to check, with his or her own eyes, the circumferential edge of the through hole PI through the areas not covered with the front, rear, or lower engaging stop 23, 24, or 25 (shown in FIG. 4 and other drawings). Consequently, the operator is allowed to check, with his or her own eyes, whether or not the engaging bevel 22 is located outside the vehicle cabin.

If the operator stops pulling the drainpipe 21 in such a state, then the engaging bevel 22 will be located outside the vehicle cabin and engaged with the circumferential edge of the through hole PI of the floor panel P as shown in FIG. 10, and the front, rear, and lower engaging stops 23, 24, and 25 (shown in FIG. 2 and other drawings) and the upper protrusion (shown in FIG. 2 and other drawings) will be located inside the vehicle cabin and engaged with the circumferential edge of the through hole P1. Thus, the drainage member 20 may be mounted onto the floor panel P with reliability.

As can be seen from the foregoing description, the operator is allowed to mount the drainage member 20 onto the floor panel P just by working inside the vehicle cabin. That is to say, there is no need for any other person to work outside the vehicle cabin.

In a state where the drainage member 20 is mounted onto the floor panel P, the engaging bevel 22 projects radially outward with respect to the entire circumferential edge of the through hole P1. In this case, the engaging bevel 22 forms an integral part of the drainpipe 21 and is made of an elastic material, and therefore, easily makes close contact with the entire circumferential edge of the through hole P1. Thus, since the engaging bevel 22 functions as a seal member for sealing the circumferential edge of the through hole PI, the amount of rainwater and other kinds of moisture entering the vehicle cabin from outside the vehicle cabin may be reduced.

As can be seen from the foregoing description, in a vehicle air conditioner 1 according to this embodiment, a drainpipe 21 made of an elastic material is provided with an engaging bevel 22 engaged with a circumferential edge of a through hole PI from outside a vehicle cabin, and front, rear and lower engaging stops 23, 24, and 25 engaged with the circumferential edge of the through hole PI from inside the vehicle cabin such that the engaging bevel 22 and stops 23, 24, and 25 form integral parts of the drainpipe 21. In addition, the front, rear, and lower engaging stops 23, 24, and 25 cover discontinuous areas in the circumferential direction of the drainpipe 21, and the sum of those discontinuous areas covered by the front, rear, and lower engaging stops 23, 24, and 25 is smaller than the area covered by the engaging bevel 22. Thus, even a single operator is allowed to mount the drainage member 20 onto the floor panel P easily and with reliability.

In addition, a side surface of the engaging bevel 22 which faces toward the front, rear, and lower engaging stops 23, 24, and 25 is provided with a bevel base-end sloped surface 223, thus ensuring that the drainage member 20 stays mounted on the floor panel P with reliability.

Moreover, respective side surfaces of the front, rear, and lower engaging stops 23, 24, and 25 which face away from the engaging bevel 22 are provided with stop base-end sloped surfaces 233, 243, and 253, respectively, thus allowing the operator to mount the drainage member 20 onto the floor panel P even more easily.

Furthermore, the engaging bevel 22 is provided to cover the entire outer periphery of the drainpipe 21, and therefore, the amount of rainwater and other kinds of moisture entering the vehicle cabin from outside the vehicle cabin may be reduced.

Besides, a thinned portion 21b continuous with the engaging bevel 22 is formed on the outer periphery of the drainpipe 21, which allows the operator to mount the drainage member 20 onto the floor panel P even more easily.

### (Other embodiments)

In the embodiment described above, the operator is supposed to mount the drainage member 20 onto the floor panel P from inside the vehicle cabin. However, the operator may mount the drainage member 20 onto the floor panel P from outside the vehicle cabin as well. In that case, the engaging portion located outside the vehicle cabin may cover discontinuous areas, and the sum of those discontinuous areas may be smaller than the area covered by an engaging portion located inside the vehicle cabin.

Also, in the embodiment described above, in a state where the drainage member 20 is mounted onto the floor panel P, the tip end hole 21a of the drainpipe 21 is opened near the through hole PI of the floor panel P outside the vehicle cabin. Alternatively, a portion of the drainpipe 21 located outside the vehicle cabin may be extended to the point that the tip end hole 21a is opened at a distance from the through hole PI of the floor panel P. In that case, the condensed water drained through the tip end hole 21a may be prevented from entering the vehicle cabin through the through hole PI of the floor panel P.

### INDUSTRIAL APPLICABILITY

As can be seen from the foregoing description, a drainpipe and vehicle air conditioner according to the present invention may be installed and used in cars and other types of vehicles, for example.

### DESCRIPTION OF REFERENCE CHARACTERS

- 1: Vehicle Air Conditioner
- 10: Casing
- 11: Drain Outlet
- 20: Drainage Member
- 21: Drain Pipe
- 21b: Thinned Portion (Recess)
- 22: Engaging Bevel (First Engaging Portion)
- 223: Bevel Base-End Sloped Surface (First Sloped Surface)
- 23: Front Engaging Stop (Second Engaging Portion)
- 233: Stop Base-End Sloped Surface (Second Sloped Surface)
- 24: Rear Engaging Stop (Second Engaging Portion)
- 25: Lower Engaging Stop (Second Engaging Portion)
- 26: Upper Protrusion
- P: Floor panel (Vehicle Cabin Wall)
- P1: Through Hole

## Claims

1. A drainage member (20) connected to a vehicle air conditioner's drain outlet (11), through which condensed water condensed by a cooling heat exchanger in a casing (10) is drained out of the casing (10), and inserted into a through hole (P1) of a vehicle cabin wall (P), which separates inside of a vehicle cabin from outside of the vehicle cabin, in order to drain the condensed water into the outside of the vehicle cabin, the drainage member (20) comprising:
a drainpipe (21) made of an elastic material;
an engaging bevel (22) which forms an integral part of the drainpipe (21) so as to protrude radially outward from an outer periphery of the drainpipe (21)with respect to a circumferential edge of the through hole (P1), and which is engaged with the circumferential edge of the through hole (P1) from outside of the vehicle cabin wall (P); and
three engaging stops (23, 24, 25) which form an integral part of the drainpipe (21) so as to protrude radially outward from the outer periphery of the drainpipe (21) with respect to the circumferential edge of the through hole (P1), and which are engaged with the circumferential edge of the through hole (P1) from inside of the vehicle cabin wall (P), wherein
the engaging bevel (22) covers the entire outer periphery of the drainpipe (21), the engaging bevel (22) has a side surface which faces toward the engaging stops (23, 24, 25) which defines a first sloped surface (223) that slopes such that the closer to a radially outer edge of the drainpipe (21), the closer to the engaging stops (23, 24, 25) the first sloped surface (223) is, the three engaging stops (23, 24, 25) are spaced apart from one another approximately 90 degrees in a circumferential direction of the drainpipe (21) the engaging stops (23, 24, 25) have a side surface which faces away from the engaging bevel (22) and which defines a second sloped surface (233) that slopes such that the closer to a radially outer edge of the drainpipe (21), the closer to the engaging bevel (22) the second sloped surface (233) is, and the engaging stop (23, 24, 25) covers discontinuous areas in a circumferential direction of the drainpipe (21) and the sum of the discontinuous areas covered by the engaging stop (23, 24, 25) is smaller than an area covered by the engaging bevel (22).

2. The drainage member (20) of claim 1, wherein
a recess (21b) continuous with the engaging bevel (22) has been formed on a portion of the outer periphery of the drainpipe (21), the portion being located closer to the engaging stop (23, 24, 25) than to the engaging bevel (22).

3. A vehicle air conditioner (1) comprising the drainage member (20) of any one of claims 1-2.

## Patentansprüche

1. Drainageelement (20), das mit einer Auslassöffnung (11) einer Fahrzeugklimaanlage verbunden ist, durch welche kondensiertes Wasser, das durch einen kühlenden Wärmetauscher in einem Gehäuse (10) kondensierte, aus dem Gehäuse (10) ausgeleitet wird, und in eine Durchgangsöffnung (P1) einer Fahrzeugkabinenwandung (P) eingeleitet wird, die das Innere der Fahrzeugkabine von dem Äußeren der Fahrzeugkabine trennt, um das kondensierte Wasser nach außerhalb der Fahrzeugkabine abzuleiten, wobei das Drainageelement (20) aufweist:
ein Ausleitrohr (21) aus einem elastischen Material;
eine Eingriffsabschrägung (22), die einen integralen Bestandteil des Ausleitrohrs (21) bildet, um gegenüber einer Umfangskante der Durchgangsöffnung (P1) radial nach außen über einen Außenumfang des Ausleitrohrs (21) vorzustehen, und die mit der Umfangskante der Durchgangsöffnung (P1) von außerhalb der Fahrzeugkabinenwandung (P) in Wirkverbindung steht; und
drei Eingriffsanschläge (23, 24, 25), die einen integralen Bestandteil des Ausleitrohrs (21) bilden, um gegenüber der Umfangskante der Durchgangsöffnung (P1) radial nach außen von dem Außenumfang des Ausleitrohrs (21) abzustehen, und die mit der Umfangskante der Durchgangsöffnung (P1) von innerhalb der Fahrzeugkabinenwandung (P) in Wirkverbindung stehen, wobei
die Eingriffsabschrägung (22) den gesamten Außenumfang des Ausleitungsrohrs (21) abdeckt, die Eingriffsabschrägung (22) eine Seitenfläche hat, die den Eingriffsanschlägen (23, 24, 25) zugewandt ist und die eine erste geneigte Fläche (223) definiert, die derart geneigt verläuft, dass die erste geneigte Fläche (223) je näher an einer radial äußeren Kante des Ausleitrohrs (21) umso näher an den Eingriffsanschlägen (23, 24, 25) ist, die drei Eingriffsanschläge (23, 24, 25) voneinander um etwa 90 Grad in einer Umfangsrichtung des Ausleitrohrs beabstandet sind, die Eingriffsanschläge (23, 24, 25) eine Seitenfläche haben, die von der Eingriffsabschrägung (22) weg zeigt und die eine zweite geneigte Fläche (233) definiert, die derart geneigt verläuft, dass die zweite geneigte Fläche (233) je näher an einer radial äußeren Kante des Ausleitrohrs (21) umso näher an der Eingriffsabschrägung ist, und der Eingriffsanschlag (23, 24, 25) unterbrochene Bereiche in einer Umfangsrichtung des Ausleitrohrs (21) abdeckt und die Summe der unterbrochenen Flächen, die von dem Eingriffsanschlag (23, 24, 25) bedeckt werden, kleiner ist als eine Fläche, die durch die Eingriffsabschrägung (22) bedeckt wird.

2. Drainageelement (20) nach Anspruch 1, wobei
eine Ausnehmung (21b) einstückig mit der Eingriffsabschrägung (22) an einem Teil des Außenumfangs des Ausleitrohrs (21) ausgebildet wurde, wobei sich der Teil näher an dem Eingriffsanschlag (23, 24, 25) als an der Eingriffsabschrägung (22) befindet.

3. Fahrzeugklimaanlage (1), aufweisend das Drainageelement (20) nach einem der Ansprüche 1 bis 2.

## Revendications

1. Élément de drainage (20) raccordé à une sortie de drainage (11) d'un climatiseur de véhicule à travers lequel une eau de condensation condensée par un échangeur de chaleur pour refroidissement dans un carter (10) est drainée hors du carter (10), et est introduite dans un trou débouchant (P1) d'une paroi de cabine de véhicule (P), laquelle sépare l'intérieur d'une cabine de véhicule d'un extérieur de la cabine de véhicule, afin de drainer l'eau de condensation jusque vers l'extérieur de la cabine de véhicule, l'élément de drainage (20) comprenant :
un tuyau de drainage (21) fabriqué dans une matière plastique ;
un biseau de prise (22), lequel forme partie intégrante avec le tuyau de drainage (21) de manière à faire saillie radialement et vers l'extérieur à partir d'une périphérie extérieure du tuyau de drainage (21) par rapport à un bord circonférentiel du trou débouchant (P1), et lequel est en prise avec le bord circonférentiel du trou débouchant (P1) à partir de l'extérieur de la paroi de cabine de véhicule (P), et
trois butées de prise (23, 24, 25), lesquelles forment partie intégrante avec le tuyau de drainage (21) de manière à faire saillie radialement et vers l'extérieur à partir de la périphérie extérieure du tuyau de drainage (21) par rapport au bord circonférentiel du trou débouchant (P1), et sont en prise avec le bord circonférentiel du trou débouchant (P1) à partir de l'intérieur de la paroi de cabine de véhicule (P), dans lequel
le biseau de prise (22) couvre toute la périphérie extérieure du tuyau de drainage (21) ;
le biseau de prise (22) présente une surface latérale faisant face aux butées de prise (23, 24, 25) et définissant une première surface inclinée (223) dont la pente est telle que plus elle se rapproche d'un bord extérieur sur le plan radial du tuyau de drainage (21), plus la première surface inclinée (223) se rapproche des trois butées de prise (23, 24, 25) ;
les trois butées de prise (23, 24, 25) sont espacées les unes des autres d'environ 90 degrés dans une direction circonférentielle du tuyau de drainage (21) ;
les trois butées de prise (23, 24, 25) présentent une surface latérale orientée à l'opposé du biseau de prise (22) et définissant une seconde surface inclinée (233) dont la pente est telle que plus elle se rapproche d'un bord extérieur sur le plan radial du tuyau de drainage (21), plus la seconde surface inclinée (233) se rapproche du biseau de prise (22), et
la butée de prise (23, 24, 25) couvre des zones discontinues dans une direction circonférentielle du tuyau de drainage (21), et la somme des zones discontinues couvertes par la butée de prise (23, 24, 25) est inférieure à une zone couverte par le biseau de prise (22).

2. Élément de drainage (20) selon la revendication 1, dans lequel un retrait (21b) en continuité avec le biseau de prise (22) a été formé à une portion de la périphérie extérieure du tuyau de drainage (21), la portion se trouvant plus près de la butée de prise (23, 24, 25) que le biseau de prise (22).

3. Climatiseur de véhicule (1) comprenant l'élément de drainage (20) selon l'une quelconque des revendications 1 ou 2.
